# EUROPÄISCHE PATENTSCHRIFT

(11) **EP 0 983 313 B1**
(45) Veröffentlichungstag und Bekanntmachung des Hinweises auf die Patenterteilung: **17.10.2001**
(21) Anmeldenummer: 98925558.3
(22) Anmeldetag: 08.05.1998
(51) Int. Cl.: C08J 9/14, C08L 75/04

(54) **VERFAHREN ZUR HERSTELLUNG VON WEICHEN BIS HALBHARTEN POLYURETHANINTEGRALSCHAUMSTOFFEN**
METHOD FOR PRODUCING SOFT TO MEDIUM-HARD STRUCTURAL POLYURETHANE FOAMS
PROCEDE DE PRODUCTION DE MOUSSES STRUCTUREES DE POLYURETHANE MOLLES A MI-DURES

(30) Priorität: 21.05.1997 DE 19721220
(43) Veröffentlichungstag der Anmeldung: 08.03.2000
(73) Patentinhaber: BAYER AG, 51368 Leverkusen (DE)
(72) Erfinder: EISEN, Norbert, D-50999 Köln (DE); AVAR, Geza, D-51373 Leverkusen (DE); HAAS, Peter, D-42781 Haan (DE)
(86) Internationale Anmeldenummer: EP9802705
(87) Internationale Veröffentlichungsnummer: WO9852998

(56) Entgegenhaltungen:
- EP-A- 0 364 854
- US-A- 5 110 837

## Beschreibung

Gegenstand der Erfindung ist ein Verfahren zur Herstellung von weichen bis halbharten Polyurethanformkörpern mit verdichteter Randzone mit gegebener Härte und einem deutlich weicheren Zellkern, sogenannten Integralschaumstoffen, bei denen physikalische Treibmittel aus der Reihe der C₆-Kohlenwasserstoffe verwendet werden.

Zum Aufbau einer verdichteten Randzone mit zelliger Innenstruktur von weichen bis halbharten Polyurethanformteilen wurde bis zur Kenntnis des ozonschädigenden Verhaltens nahezu ausschließlich Monofluortrichlormethan (R 11) als Treibmittel verwendet. Einhergehend mit diesen Befunden wurde eine Vielzahl neuer Fluor enthaltender Treibgase vom Typ der Hydrogenfluorkohlenwasserstoffe (HFCKW) und Fluorkohlenwasserstoffe (FKW) entwickelt und untersucht. In diese Untersuchungen wurden schon früher Kohlenwasserstoffe einbezogen, wie aus einigen Patentveröffentlichungen hervorgeht (DE-A 3 430 285, US 3 178 490, US 3 182 104, US 4 065 410, DE-A 2 622 957, US 3 931 106 und DE-A 2 544 560).

Nach Bekanntwerden des ozonschädlichen Verhaltens der Fluorkohlenwasserstoffe hat es nicht an Versuchen gefehlt, andere Arten von Treibmitteln zur Herstellung von zellhaltigen Polyurethanen einzusetzen. So wird in EP-A 364 854 ein Verfahren zur Herstellung von Formkörpern mit einer verdichteten Randzone und einem zelligen Kern, vorzugsweise Schuhsohlen, beschrieben aus an sich bekannten Ausgangsstoffen, jedoch unter Verwendung von niedrig siedenden aliphatischen und/oder cycloaliphatischen Kohlenwasserstoffen mit 4 bis 8 Kohlenwasserstoffatomen im Molekül. Als aliphatische oder cycloaliphatische Kohlenwasserstoffe werden unter anderem genannt: Cyclobutan, Cyclopentan, Cycloheptan, Cyclooctan, Butan, n- und iso-Pentan, n- und iso-Hexan, n- und iso-Heptan und n- und iso-Octan, bevorzugt Cyclohexan, iso- und n-Pentan.

Aufgabe der Erfindung war die Entwicklung eines flexiblen Integralschaumstoffes mit ausgeprägter Integralstruktur, die gleich oder ähnlich der durch FCKW- oder HFCKW getriebenen Produkten ist.

Überraschenderweise wurde nun gefunden, daß bei Verwendung bestimmter C₆-Kohlenwasserstoffgemische als Treibmittel Integralschaumstoffe erhalten werden können, die bezüglich Stauchhärte und Oberflächenhärte den R 11- bzw. R 141 b-getriebenen Systemen ebenbürtig und deutlich besser als n-Pentan, c-Pentan, R 22 oder R 134 a-getriebene Systeme sind.

Gegenstand der vorliegenden Erfindung ist daher ein Verfahren zur Herstellung von weichen bis halbharten Polyurethanformkörpern mit einer verdichteten Randzone und einem weichen, zelligen Kern, das dadurch gekennzeichnet ist, daß man
a) organische und/oder modifizierte organische Polyisocyanate und/oder Polyisocyanatprepolymere mit
b) mindestens einer Polyolkomponente der OH-Zahl 20 bis 200 und einer Funktionalität von 2 bis 6, bevorzugt 2 bis 3,
c) gegebenenfalls in Kombination mit einer Polyolkomponente der OH-Zahl 201 bis 899 und einer Funktionalität von 2 bis 3 sowie mit
d) mindestens einer Kettenverlängerungskomponente der OH- oder Amin-Zahl von 600 bis 1.850 und der Funktionalität von 2 bis 4 und mit
e) gegebenenfalls an sich bekannten Zusatzstoffen, Aktivatoren und/oder Stabilisatoren
in Gegenwart von Wasser und in Gegenwart von C₆-Kohlenwasserstoffgemischen umfassend 2-Methylpentan, 3-Methylpentan, 2,3-Dimethylbutan und 2,2-Dimethylbutan mit einem Siedebereich von 55 bis 65°C umsetzt.

Für das erfindungsgemäße Verfahren ist es von Bedeutung, daß der Siedepunktbereich des C₆-Kohlenwasserstoffgemisches in dem angegebenen Bereich liegt, bevorzugt im Bereich 58 bis 63°C.

Selbstverständlich ist es auch möglich C₆-Kohlenwasserstoffe in das Gemisch einzusetzen, die einen Siedepunkt außerhalb dieses Bereiches besitzen. Entscheidend ist dabei nur, daß der Anteil dieser C₆-Kohlenwasserstoffe so gewählt wird, daß der angegebene Siedebereich des Gemisches erhalten bleibt. Insbesondere eignen sich für das erfindungsgemäße Verfahren ein C₆-Kohlenwasserstoffgemisch, bestehend aus 2-Methylpentan, 3-Methylpentan, 2,3-Dimethylbutan und 2,2-Dimethylbutan, wobei die Mengenbereiche der eingesetzten Hexane sich wie folgt ergeben, 2-Methylpentan: 45 bis 65 Gew.-%, 3-Methylpentan: 15 bis 30 Gew.-%, 2,3-Dimethylbutan: 10 bis 25 Gew.-% und 2,2-Dimethylbutan: 0 bis 10 Gew.-%, zu jeweils 100 Gew.-% ergänzt.

Wie zuvor erwähnt, wird bei dem erfindungsgemäßen Verfahren zusätzlich als Treibmittel noch Wasser verwendet. Die Menge an Wasser, die Polyurethan-Formulierungen zusätzlich einverleibt wird, beträgt üblicherweise 0,05 bis 0,6 Gew.-Teile, vorzugsweise 0,1 bis 0,4 Gew.-Teile, bezogen auf 100 Gew.-Teile der Komponente b) und c) (Polyolkomponenten). Die Menge an C₆-Kohlenwasserstoffgemischen beträgt 0,2 bis 10 Gew.-Teile, bevorzugt 0,5 bis 8 Gew.-Teile, bezogen auf 100 Gew.-Teile der Komponenten b), c), d) und e) oder b) und d) oder b), c) und d) oder b), d) und e), je nach der jeweiligen Zusammensetzung der Umsetzungsprodukte.

Die nach dem erfindungsgemäßen Verfahren hergestellten weichen bis halbharten Polyurethanschaumstoffe mit Integralstruktur besitzen Shore A-Härten zwischen 60 und 90 in der Randzone und Stauchhärten zwischen 80 und 300 kPa bei Rohdichten zwischen 400 und 600 kg/m³.

Besonders vorteilhaft ist bei dem erfindungsgemäßen Verfahren die Kombination von hohen Oberflächenhärten (in Shore A) mit niedrigen Stauchhärten der Formkörper, was auf eine ausgeprägte Integralstruktur hinweist.

Dieses Eigenschaftsprofil konnte nur mit den erfindungsgemäßen C₆-Kohlenwasserstoffgemischen sowie den aus umweltrelevanten Gründen nicht mehr einsetzbaren halogenierten Fluorkohlenwasserstoffen R 11 oder R 141b erhalten werden.

Als organische Polyisocyanate (a) kommen die an sich bekannten aliphatischen, cycloaliphatischen, araliphatischen und vorzugsweise aromatischen mehrwertigen Isocyanate in Frage, wie sie beispielsweise in EP-A 364 854 genannt sind. Besonders geeignet sind die Toluylendiisocyanate und die Diphenylmethandiisocyanate, deren Modifizierungsprodukte oder ihre entsprechenden Prepolymere, die durch Urethan-, Harnstoff-, Biuret-, Allophanat-, Carbodiimid- oder Uretdion-Gruppen modifiziert sein können. Insbesondere werden als aromatische Polyisocyanate genannt: 4,4-Diphenylmethandiisocyanat, Mischungen aus 2,4'- und/oder 4,4'-Diphenylmethandiisocyanat oder Roh-MDI-Typen und/oder 2,4- und/oder 2,6-Toluylendiisocyanat sowie deren Mischungen untereinander.

Als Polyolkomponente (b) eignen sich solche mit einer OH-Zahl von bevorzugt 20 bis 200, besonders bevorzugt 20 bis 50 und einer Funktionalität von bevorzugt 2 bis 3, wobei die Polyetherpolyole eine Molmasse von 2 000 bis 8 000 und die Polyesterpolyole eine Molmasse von 2000 bis 4000 aufweisen. Gegebenenfalls können Polyole der OH-Zahl 201 bis 899 und einer Funktionalität von 2 bis 3 als Polyolkomponente c) mitverwendet werden. Insbesondere bewährt haben sich Polyole ausgewählt aus der Gruppe Polyether-Polyole und Polyester-Polyole, wie sie durch Addition von Alkylenoxiden, wie Ethylenoxid und Propylenoxid, an mehrfunktionellen Starter, wie Ethylenglykol, Propylenglykol, Glycerin, Trimethylolpropan, Sorbit und/oder Ethylendiamin oder durch Kondensation von Dicarbonsäuren wie Adipinsäure, Bernsteinsäure, Glutarsäure, Korksäure, Sebacinsäure, Maleinsäure, Phthalsäure mit überwiegend bifunktionellen Hydroxykomponenten, wie Ethylenglykol, Propylenglykol, aufgebaut aus Ethylenoxid und Propylenoxid sowie Glycerin, Trimethylolpropan, Ethyldiamin, Propylenglykol, Ethylenglykol, Sorbit und deren Gemische aus Starter. Als Polyolkomponente (b) können auch modizifierte Polyole verwendet werden, wie sie durch Pfropfung von Polyolen mit Styrol und/oder Arylnitril, als Polyharnstoffdispersionen oder als PIPA-Polyole erhalten werden.

Die Polyether- und Polyesterpolyole können sowohl einzeln als auch im Gemisch untereinander eingesetzt werden.

Als Komponente (d) eignen sich solche, deren OH- oder Aminzahl 600 bis 1850 und deren Funktionalität zwischen 2 und 4, insbesondere 2 und 3, liegt.

Beispielhaft zu nennen sind hier Glykole, wie Ethylenglykol, 1,4-Butandiol, Glycerin, Trimethylolpropan und deren kurzkettige Alkoxylierungsprodukte, sowie Diethyltoluylendiamin-Isomere. Die Vernetzerkomponente (Kettenverlängerungskomponente) d) wird in Mengen von 3 bis 20 Gew.-%, bezogen auf die Polyolkomponente b) und c) (falls vorhanden) verwendet, wobei Ethylenglykol und 1,4-Butandiol sowie als Diamine Diethyltoluylendiamin-Isomere bevorzugt werden.

Als unter e) aufgeführte Komponente sind zu verstehen: Tertiäre Aminogruppen enthaltende Verbindungen, wie 1,4-Diazo-(2.2.2)-bicyclooctan und Bis-(2-dimethylaminoethyl)-ether, sowie Organometallverbindungen, wie Dimethylzinndilaurat oder Dibutylzinndilaurat, weiter Farbpasten, Vergilbungsschutzmittel, Füllstoffe, Flammschutzmittel, interne Trennmittel und Stabilisatoren, wie sie aus EP 0 364 854 bekannt sind.

Die Mengen sind abhängig vom jeweiligen Einsatzebiet und können durch Vorversuche ermittelt werden.

Die Herstellung der erfindungsgemäße Formkörper ist dem Fachmann ebenfalls bekannt und braucht im Detail nicht mehr näher beschrieben werden. Verweisen wird in diesem Zusammenhang wiederum auf EP-A 364 854.

Einsatzbereich für die erfindungsgemäßen Formkörper z.B. Fahrradsättel, Sicherheitsventile im Innenraum von Kraftfahrzeugen (Armlehnen, Kopfstützen, Lenkradummantelungen), Motorrad-Sitzbänke, Armlehnen im Büromöbelbereich sowie Behandlungsstühle im Medizinbereich.

Überraschenderweise hat sich bei dem erfindungsgemäßen Verfahren gezeigt, daß die Verwendung von bestimmten C₆-Kohlenwasserstoffgemischen mit einem Siedebereich von 55 bis 65°C Vorteile zeigen im Hinblick auf Treibmittelausbeute, Oberflächenhärte und Stauchhärte, verglichen mit der Verwendung von beispielsweise Cyclohexan, das in EP 364 854 als bevorzugt genannt wurde.

### Beispiele

### Beschreibung der Rohstoffe

- Polyol 1:: Polyetherpolyol der OHZ 29, hergestellt durch Addition von 80 Gew.-% Propylenoxid und 20 Gew.-% Ethylenoxid an Propylenglykol als Starter mit überwiegend primären OH-Gruppen.
- Polyol 2:: Polyetherpolyol der OHZ 28, hergestellt durch Addition von 80 Gew.-% Propylenoxid und 20 Gew.-% Ethylenoxid an Trimethyolpropan als Starter mit überwiegend primären OH-Gruppen, zu 20 % gepfropft mit Styrol-Acrylnitril.
- Polyol 3: Polyetherpolyol der OHZ 35, hergestellt durch Addition von 87 Gew.-% Propylenoxid und 13 Gew.-% Ethylenoxid an Trimethyolpropan als Starter mit überwiegend primären OH-Gruppen.

### Polyisocyanate A

Polyisocyanatprepolymer mit einem Isocyanatgehalt von 28 %, hergestellt durch Umsetzung eines Polyisocyanatgemisches der Diphenylmethanreihe, das durch Phosgenierung eines Anilin/Formaldehydkondensates erhalten wurde und einen Isocyanatgehalt von 30 % mit 80 Gew.-% Diisocyanatodiphenylmethan, sowie 20 Gew.-% höherkerniger Homologen aufweist, mit einem Polyether der OH-Zahl 500 auf Basis von Propylenglykol als Starter und Propylenoxid.

### Herstellung der Prüfkörper

Die nachstehend beschriebenen Rohstoffgemische werden in der für die maschinelle Verarbeitung der Polyurethane üblichen Weise in eine auf 40°C geheizte Plattenform der Größe 190 x 155 x 20 mm eingebracht, auf 600 kg/m³ verdichtet, und nach 10 Minuten entformt. Die Temperatur der Rohstoffe beträgt 25°C.

| Polyolformulierung A | |
|---|---|
| Polyol 1: | 40,0 Gew.-Tle. |
| Polyol 2: | 35,0 Gew.-Tle. |
| Polyol 3: | 30,0 Gew.-Tle. |
| Ethylenglykol: | 9,0 Gew.-Tle. |
| Wasser: | 0,1 Gew.-Tle. |
| Stabilisator SH 205: | 0,3 Gew.-Tle. |
| Fa. OSi | |
| Aktivator DABCO 33 LV: | 0,35 Gew.-Tle. |
| Fa. Air Products | |

| Rezepturen für Probekörper | |
|---|---|
| Polyolformulierung A | 100 Gew.-Tle. |
| Treibmittel | X Gew.-Tle. (Angaben zu X siehe Tabelle 1) |
| Isocyanat A | 48 Gew.-Tle. |

**Tabelle 1**

| **Beispiel- Nr.** | **Treibmittel** | **Gew.- Tle.** | **Stauchhärte [kPa]** | **Shore A** | **Korrelations-Faktor: Stauchhärte/Shore A** |
|---|---|---|---|---|---|
| 1 (Vergleich) | R 11 | 15 | 255 | 82 | 3,11 |
| 2 (Vergleich) | R 141 b | 15 | 275 | 81 | 3,39 |
| 3 (Vergleich) | R 22 | 3 | 430 | 84 | 5,12 |
| 4 (Vergleich) | R 134 a | 3 | 462 | 82 | 5,63 |
| 5 (Vergleich) | n-Pentan | 5 | 483 | 87 | 5,55 |
| 6 (Vergleich) | c-Pentan | 6 | 437 | 81 | 5,39 |
| 7 (Vergleich) | 2,2-Dimethylbutan | 6 | 441 | 81 | 5,44 |
| 8 (Vergleich) | 3-Methylpentan | 9 | 283 | 81 | 3,45 |
| 9 (Vergleich) | Cyclohexan | 15 | 499 | 76 | 6,56 |
| 10 (Erfindung) | i-Hexan* | 7 | 270 | 82 | 3,29 |

| | | | | | |
|---|---|---|---|---|---|
| * Mischung aus: 56 Gew.-% 2-Methylpentan 21 Gew.-% 3-Methylpentan 17 Gew.-% 2,3-Dimethylbutan 6 Gew.-% 2,2-Dimethylbutan Siedepunkt: ca. 61°C | | | | | |

Das Eigenschaftsprofil aus Integralschaumstoffen wird im besonderen Maße bestimmt durch die Oberflächenhärte (gemessen in Shore A) sowie der Stauchhärte.

Vorteilhaft ist eine möglichst hohe Oberflächenhärte (hohe Rohdichte im Randbereich) verbunden mit einer im Vergleich zur Gesamtrohdichte gesehen geringen Stauchhärte.

Diese Kombination von Eigenschaften ist, wie die Vergleichsversuche zeigen, stark abhängig von der Wahl des Treibmittels.

Als Maßzahl für die Bewertung der Integralstruktur dient ein Korrelationsfaktor aus Stauchhärte und Oberflächenhärte.

Je kleiner der Wert dieses Korrelationsfraktors ist, desto besser ist die Integralstruktur.

Wie die Vergleichsversuche 1 bis 10 zeigen, erreichen nur die Probekörper mit einer speziellen i-Hexanmischung als Treibmittel Korrelationsfaktoren, die mit R 11 und R 141 b getriebenen Systemen vergleichbar sind.

Die erfindungsgemäßen Gemische weisen einen Siedebereich im Bereich von 55 bis 65°C auf, d.h. der Anteil an 2,2-Dimethylbutan (Siedepunkt: 49,7°C) ist möglichst gering (max. ca. 10 Gew.-%).

Auch die mit n- und c-Pentan getriebenen Systeme können nicht die Werte dieser i-Hexan Systeme erzielen.

Das erfindungsgemäße i-Hexangemisch zeigt auch Vorteile gegenüber 2,2-Dimethylbutan und 3-Methylpentan, wenn diese als alleiniges Treibmittel eingesetzt werden. Bei Cyclohexan ist insbesondere die schlechte Treibmittelausbeute nachteilig.

## Patentansprüche

1. Verfahren zur Herstellung von weichen bis halbharten Polyurethankörpern mit einer verdichteten Randzone und einem weichen, zelligen Kem, **dadurch gekennzeichnet, dass** man
a) organische und/oder modifizierte organische Polyisocyanate und/oder Polyisocyanatprepolymere mit
b) mindestens einer Polyolkomponente der OH-Zahl 20 bis 200 und einer Funktionalität von 2 bis 6,
c) gegebenenfalls in Kombination mit einer Polyolkomponente der OH-Zahl 201 bis 899 und einer Funktionalität von 2 bis 3 sowie mit
d) mindestens einer Kettenverlängerungskomponente der OH- oder Amin-Zahl von 600 bis 1.850 und der Funktionalität von 2 bis 4 und mit
e) gegebenenfalls an sich bekannten Zusatzstoffen, Aktivatoren undloder Stabilisatoren
in Gegenwart von Wasser und in Gegenwart von C₆-Kohlenwasserstoffgemischen enthaltend 2-Methylpentan, 3-Methylpentan, 2,3-Dimethylbutan und gegebenenfalls 2,2-Dimethylbutan mit einem Siedebereich von 55 bis 65 °C umsetzt, wobei die Menge an C₆-Kohlenwasserstoffgemisch 0,2 bis 10 Gew.-Teile, bezogen auf 100 Gew.-Teile der eingesetzten Komponenten b) bis e) beträgt, und die Vernetzer-/Kettenverlängerungskomponente d) in Mengen von 3 bis 20 Gew.-%, bezogen auf die Polyolkomponenten b) und c) eingesetzt wird.

2. Verfahren nach Anspruch 1, **dadurch gekennzeichnet, daß** als Kettenverlängerer d) Glykole eingesetzt werden.

3. Verfahren nach Anspruch 1, **dadurch gekennzeichnet, daß** als Kettenverlängerer d) Diethyltoluylendiamin-Isomere verwendet werden.

4. Verfahren nach Anspruch 1, **dadurch gekennzeichnet, daß** Formteile einer Rohdichte von 250 bis 900 kg/m³ erhalten werden.

## Claims

1. A process for preparing flexible to semi-rigid polyurethane items with a compacted edge zone and a flexible cellular core **characterised in that**
a) organic and/or modified organic polyisocyanates and/or polyisocyanate pre-polymers are reacted with
b) at least one polyol component with an OH-value of 20 to 200 and a functionality of 2 to 6,
c) optionally combined with a polyol component with an OH-value of 201 to 899 and a functionality of 2 to 3 as well as with
d) at least one chain-lengthening component with an OH- or amine-value of 600 to 1850 and a functionality of 2 to 4 and with
e) optional additives, activators and/or stabilisers known per se
in the presence of water and in the presence of C₆ hydrocarbon mixtures containing 2-methylpentane, 3-methylpentane, 2,3-dimethylbutane and optionally 2,2-dimethylbutane with a boiling range of 55 to 65°C, wherein the amount of C₆ hydrocarbon mixture is 0.2 to 10 parts by wt., with respect to 100 parts by wt. of components b) to e) used, and the cross-linking / chain-lengthening component d) is used amounts of 3 to 20 wt.%, with respect to the polyol components b) and c).

2. A process according to Claim 1, **characterised in that** glycols are used as chain-lengthener d).

3. A process according to Claim 1, **characterised in that** isomers of diethyltoluylene diamine are used as chain lengthener d).

4. A process according to Claim 1, **characterised in that** moulded items with a bulk density of 250 to 900 kg/m³ are obtained.

## Revendications

1. Procédé pour la fabrication de corps de polyuréthane souples à semi-durs, à zone de bordure compacte et noyau alvéolaire souple, **caractérisé en ce que** l'on fait réagir
a) des polyisocyanates organiques et/ou des polyisocyanates organiques modifiés et/ou des prépolymères de polyisocyanates avec
b) au moins un composant polyol d'indice d'OH 20 à 200, fonctionnalité 2 à 6,
c) le cas échéant en combinaison avec un composant polyol d'indice d'OH 201 à 899, fonctionnalité 2 à 3, et avec
d) au moins un composant allongeur de chaîne d'indice d'OH ou d'incide d'amine 600 à 1 850, fonctionnalité 2 à 4, et avec
e) le cas échéant des additifs, activateurs et/ou stabilisants connus en soi
en présence d'eau et en présence de mélanges d'hydrocarbures en C₆ contenant du 2-méthylpentane, du 3-méthylpentane, du 2,3-diméthylbutane et le cas échéant du 2,2-diméthylbutane et bouillant dans l'intervalle de 55 à 65°C, la quantité du mélange d'hydrocarbures en C₆ représentant de 0,2 à 10 parties en poids pour 100 parties en poids des composants b) à e) mis en oeuvre, et celle du composant réticulant/allongeur de chaîne d) de 3 à 20 % du poids des composants polyols b) et c).

2. Procédé selon la revendication 1, **caractérisé en ce que** les allongeurs de chaîne d) mis en oeuvre sont dés glycols.

3. Procédé selon la revendication 1, **caractérisé en ce que** les allongeurs de chaîne d) utilisés sont des isomères de la diéthyltoluylènediamine.

4. Procédé selon la revendication 1, **caractérisé en ce que** l'on obtient des pièces moulées à une densité apparente de 250 à 900 kg/m^{3.}
